# FASCICULE DE BREVET EUROPEEN

(11) **EP 4 357 248 B1**
(45) Date de publication et mention de la délivrance du brevet: **14.01.2026**
(21) Numéro de dépôt: 23204318.2
(22) Date de dépôt: 18.10.2023
(51) Int. Cl.: B64D 29/06, B64D 29/08, E05C 17/30, F16B 21/00, F16B 7/10, F16B 21/16

(54) **ENSEMBLE TÉLESCOPIQUE AVEC VERROUILLAGE EN CONFIGURATION RÉTRACTÉE**
TELESKOPANORDNUNG MIT VERRIEGELUNG IN EINER EINGEZOGENEN KONFIGURATION
TELESCOPING ASSEMBLY WITH RETRACTABLE LOCKOUT

(30) Priorité: 18.10.2022 FR 2210754
(43) Date de publication de la demande: 24.04.2024
(73) Titulaire: LISI Aerospace, 75012 Paris (FR)
(72) Inventeur: RENARD, Laurent, 95310 SAINT-OUEN-L'AUMÔNE (FR); BELLAVIA, Bastien, 18120 MEREAU (FR)
(74) Mandataire: Lavoix

(56) Documents cités:
- EP-B1- 3 826 917
- CN-A- 111 692 174
- DE-A1- 102010 044 669

## Description

La présente invention concerne un ensemble télescopique comprenant : un premier corps tubulaire, s'étendant selon un axe principal ; et un deuxième corps tubulaire comprenant une portion élargie et une tige, ladite tige étant apte à coulisser dans une première extrémité axiale du premier corps tubulaire entre une configuration déployée et une configuration rétractée.

Un tel ensemble télescopique, notamment décrit dans le document EP2914793, permet par exemple de maintenir un capot en position ouverte par rapport à une structure.

Un ensemble télescopique similaire est décrit dans le document EP3826917.

Les nacelles de moteurs d'aéronefs comprennent des capots qu'il est nécessaire de maintenir fermés en vol. Les capots sont alors exposés à d'importants différentiels de pression, ainsi qu'à de larges variations de température. Il est donc essentiel de sécuriser leur système de fermeture.

La présente invention a pour but de proposer un dispositif permettant d'assurer la fermeture de capots de nacelles de moteurs d'aéronefs, notamment dans un contexte d'importantes variations de pression et de température.

A cet effet, l'invention a pour objet un ensemble télescopique du type précité, conforme aux caractéristiques de la revendication 1.

Suivant d'autres aspects avantageux de l'invention, l'ensemble télescopique comporte l'une ou plusieurs des caractéristiques suivantes, prises isolément ou suivant toutes les combinaisons techniquement possibles :
- le deuxième corps tubulaire comporte une jupe s'étendant autour de la première extrémité de la tige, ladite jupe comprenant une fente transversale dans laquelle le pion est apte à coulisser ;
- le dispositif de verrouillage comprend en outre un organe de maintien de la virole dans une position de verrouillage ou de déverrouillage ;
- l'organe de maintien comprend : une bille apte à coulisser radialement dans un logement interne de la virole ; et une cupule apte à accueillir la bille en saillie interne par rapport à la virole ;
- l'ensemble télescopique comprend en outre au moins un tube intermédiaire entre la tige et le premier corps tubulaire, l'au moins un tube intermédiaire étant apte à coulisser autour de la tige et dans la première extrémité axiale du premier corps tubulaire ;
- l'ensemble télescopique comprend en outre un actionneur apte à faire pivoter la virole autour de l'axe principal, entre les positions de verrouillage et de déverrouillage.

L'invention se rapporte en outre à un appareil comprenant : une structure ; un premier capot articulé sur ladite structure ; et un ensemble télescopique tel que décrit ci-dessus, le premier corps tubulaire et le deuxième corps tubulaire étant assemblés respectivement au premier capot et à la structure, la configuration déployée de l'ensemble télescopique permettant de disposer le capot dans une position ouverte, la configuration rétractée de l'ensemble télescopique permettant de disposer et de maintenir le capot en position fermée.

L'invention se rapporte en outre à un appareil comprenant : une structure ; un premier et un deuxième capots articulés sur ladite structure ; et un ensemble télescopique tel que décrit ci-dessus, le premier corps tubulaire et le deuxième corps tubulaire étant assemblés respectivement au premier et au deuxième capots, la configuration déployée de l'ensemble télescopique permettant de disposer les capots dans une position ouverte, la configuration rétractée de l'ensemble télescopique permettant de disposer et de maintenir les capots en position fermée.

L'invention sera mieux comprise à la lecture de la description qui va suivre, donnée uniquement à titre d'exemple non limitatif et faite en se référant aux dessins sur lesquels :
- la figure 1 est une vue éclatée partielle, en perspective, d'un ensemble télescopique selon un mode de réalisation de l'invention ;
- la figure 2 est une vue partielle, en coupe longitudinale, de l'ensemble de la figure 1 dans une première configuration ;
- la figure 3 est une vue partielle, en coupe longitudinale, de l'ensemble des figures 1 et 2 dans une deuxième configuration ;
- la figure 4 est une vue en coupe transversale de l'ensemble dans la deuxième configuration de la figure 3 ;
- la figure 5 est une vue partielle, en coupe longitudinale, de l'ensemble dans une troisième configuration ; et
- la figure 6 est une vue en coupe transversale de l'ensemble dans la troisième configuration de la figure 5.

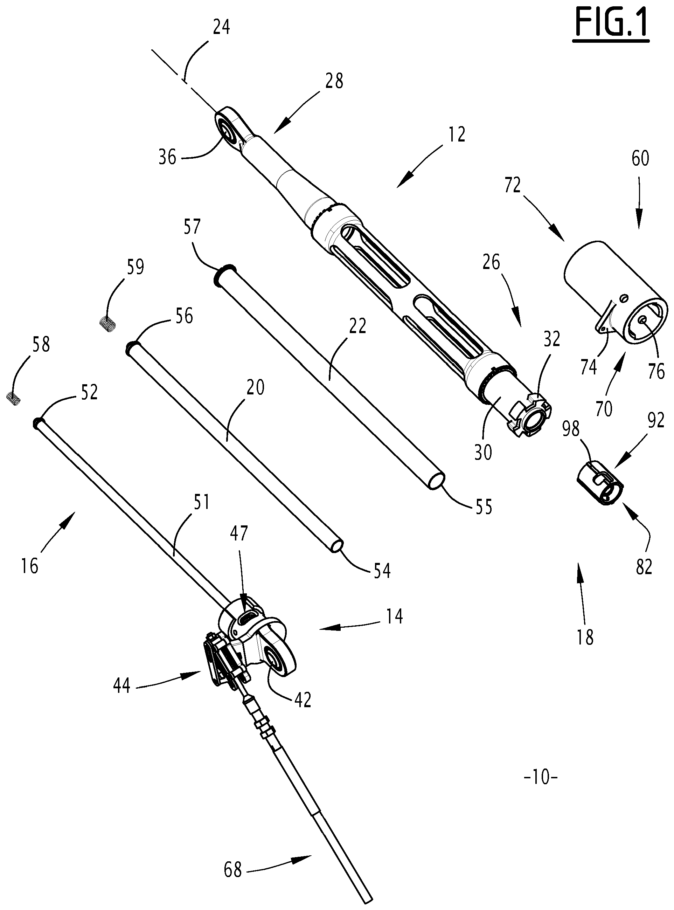

La figure 1 montre une vue éclatée, partielle, d'un ensemble 10 télescopique selon un mode de réalisation de l'invention.

L'ensemble 10 comprend : un premier corps 12 tubulaire ; un deuxième corps tubulaire 14 ; et un dispositif 18 de verrouillage. De préférence, l'ensemble 10 comprend en outre au moins un tube intermédiaire 20, 22. Dans le mode de réalisation représenté, l'ensemble 10 comprend un premier 20 et un deuxième 22 tubes intermédiaires.

Le corps 12 tubulaire s'étend selon un axe 24 principal, entre une première extrémité 26 ouverte et une seconde extrémité 28 fermée.

La première extrémité 26 comporte un col 30, sensiblement cylindrique de révolution, et des dents 32 disposées autour dudit col. Chaque dent 32 forme une saillie radiale externe par rapport au col 30. Deux dents adjacentes sont séparées par un espace angulaire non nul. Chaque dent 32 comporte une face arrière 34 sensiblement plane, perpendiculaire à l'axe 24 principal et orientée vers la seconde extrémité 28 du premier corps tubulaire. La première extrémité comporte également une face d'extrémité 35 annulaire sensiblement plane, perpendiculaire à l'axe 24 principal.

La seconde extrémité 28 comporte un premier moyen 36 d'assemblage, par exemple un premier palier sphérique. Le premier moyen 36 d'assemblage est apte à être assemblé à un premier capot d'une nacelle.

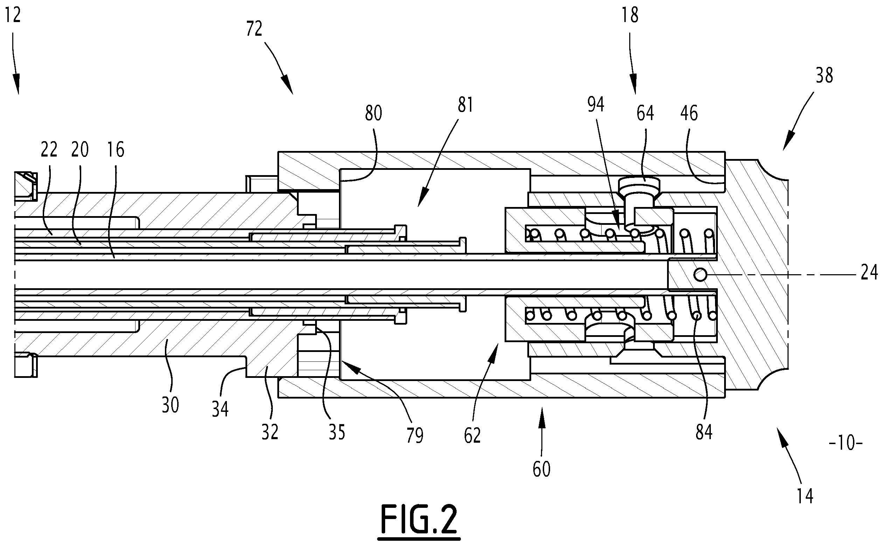

Les figures 2 à 6 montrent l'ensemble 10 dans un état assemblé, dans lequel le deuxième corps tubulaire 14 et les premier 20 et deuxième 22 tubes intermédiaires sont disposés selon l'axe 24 principal. Dans la description qui suit, on considère que l'ensemble 10 est dans l'état assemblé.

Le deuxième corps tubulaire 14 comporte une portion élargie 38, une jupe 40 et une tige 16, alignées selon l'axe 24 principal.

La portion élargie 38 comporte : un deuxième moyen 42 d'assemblage, par exemple un deuxième palier sphérique ; et un support 44 d'actionneur. Le deuxième moyen 42 d'assemblage est apte à être assemblé à un deuxième capot de la nacelle. Le support 44 est configuré pour être assemblé à un actionneur 68, comme il sera décrit ultérieurement.

La portion élargie 38 comporte une face dite face arrière 46, sensiblement plane. La face arrière 46 est perpendiculaire à l'axe 24 principal et orientée vers la seconde extrémité 28 du premier corps tubulaire.

La jupe 40 est sensiblement cylindrique de révolution et s'étend axialement à partir de la face arrière 46 de la portion élargie 38.

La jupe 40 comporte : au moins une fente transversale 47 ; au moins une cannelure 48 interne ; et au moins une première 49 et une deuxième 50 cupules externes.

L'au moins une fente transversale 47 s'étend perpendiculairement à l'axe 24 principal, entre deux extrémités fermées. Dans le mode de réalisation représenté, la jupe 40 comporte deux fentes transversales 47, symétriques l'une de l'autre par rapport à l'axe 24 principal.

L'au moins une cannelure 48 interne s'étend sur une surface interne de la jupe 40, parallèlement à l'axe 24 principal. Dans le mode de réalisation représenté, la jupe 40 comprend plusieurs cannelures 48 internes.

Chacune des première 49 et deuxième 50 cupules externes forme un creux sur une surface externe de la jupe 40. Dans le mode de réalisation représenté, la jupe 40 comporte deux premières cupules externes 49, symétriques l'une de l'autre par rapport à l'axe 24 principal ; et deux deuxièmes cupules externes 50, symétriques l'une de l'autre par rapport à l'axe 24 principal. Chacune des cupules externes 49, 50 a une forme tronconique ou de portion de sphère.

La tige 16 s'étend selon l'axe 24 principal entre une première 51 et une seconde 52 extrémités. La première extrémité 51 est solidaire de la face arrière 46 de la portion élargie 38 et disposée dans la jupe 40.

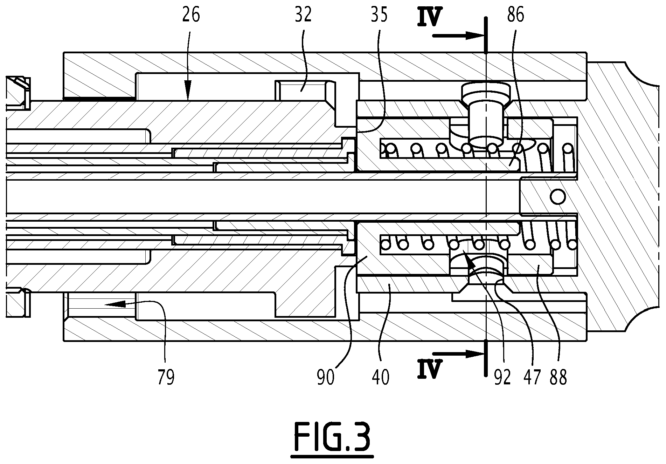

La tige 16 du deuxième corps tubulaire 14 est apte à coulisser de manière télescopique dans le premier corps 12 tubulaire, de sorte à faire varier une longueur totale de l'ensemble 10 selon l'axe 24 principal. Dans une configuration rétractée de l'ensemble 10, telle que représentée sur les figures 3 à 6, ladite longueur totale est minimale. Dans une configuration déployée de l'ensemble 10, non représentée, ladite longueur totale est maximale. La figure 2 représente l'ensemble 10 dans une configuration intermédiaire, dans laquelle sa longueur totale est comprise entre les longueurs minimale et maximale.

Dans un mode de réalisation non représenté, la seconde extrémité 52 de la tige 16 est disposée dans le premier corps 12 tubulaire dans toutes les configurations, y compris dans la configuration déployée.

Dans le mode de réalisation représenté, les tubes intermédiaires 20, 22 forment un système télescopique avec le corps 12 tubulaire et la tige 16, pour permettre à l'ensemble 10 d'atteindre une longueur totale importante en configuration déployée.

Chacun des tubes intermédiaires 20, 22 s'étend entre une première extrémité 54, 55 ouverte et une seconde extrémité 56, 57 fermée. Chacun des tubes intermédiaires 20, 22 reçoit un ressort 58, 59 de compression, disposé au niveau de sa seconde extrémité 56, 57.

Chacun des tubes intermédiaires 20, 22 est apte à coulisser de manière télescopique autour de la tige 16, dans le premier corps tubulaire. En configuration déployée, la seconde extrémité 52 de la tige est bloquée au niveau de la première extrémité 54 du premier tube intermédiaire 20 ; la seconde extrémité 56 dudit premier tube intermédiaire est bloquée au niveau de la première extrémité 55 du deuxième tube intermédiaire 22 ; et la seconde extrémité 57 dudit premier tube intermédiaire est bloquée au niveau de la première extrémité 26 du corps 12 tubulaire.

En configuration rétractée de l'ensemble 10, la seconde extrémité 52 de la tige et la seconde extrémité 56 du premier tube intermédiaire compriment axialement un premier ressort 58 ; et la seconde extrémité 56 dudit premier tube et la seconde extrémité 57 du deuxième tube intermédiaire 22 compriment axialement un deuxième ressort 59. La configuration rétractée sera décrite plus en détail ci-après.

Le dispositif 18 de verrouillage est destiné à maintenir l'ensemble 10 dans la configuration rétractée.

Le dispositif 18 de verrouillage comprend : une virole 60 ; un organe 62 de blocage ; au moins un pion 64 ; et un organe 66 de maintien.

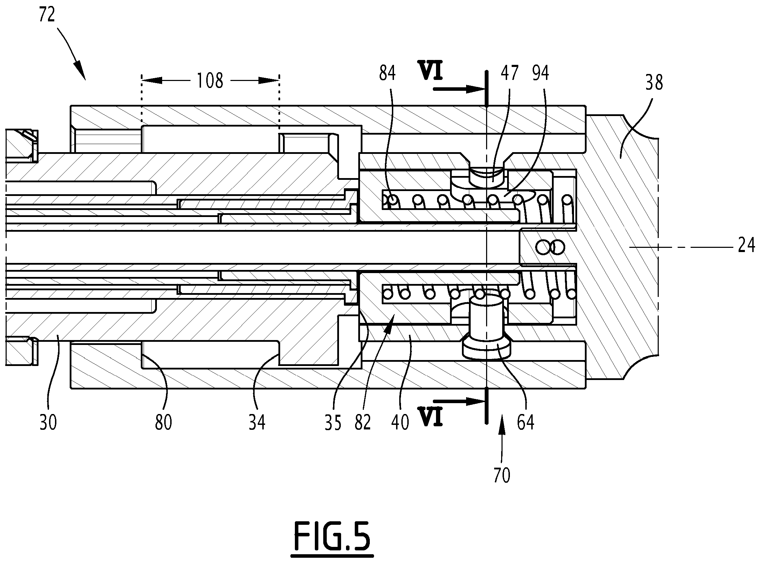

La virole 60 présente une forme tubulaire, s'étendant selon l'axe 24 principal entre une première 70 (Figure 5) et une seconde 72 extrémités ouvertes. La première extrémité 70 de la virole est disposée autour de la jupe 40 du deuxième corps tubulaire et vient en contact axial avec la face arrière 46 de la portion élargie 38.

La virole 60 comporte une patte 74 externe de raccordement à l'actionneur 68, comme il sera décrit ci-après.

La première extrémité 70 de la virole comporte au moins un trou traversant 76. Dans le mode de réalisation représenté, ladite première extrémité 70 comporte deux trous traversants 76, symétriques l'un de l'autre par rapport à l'axe 24 principal.

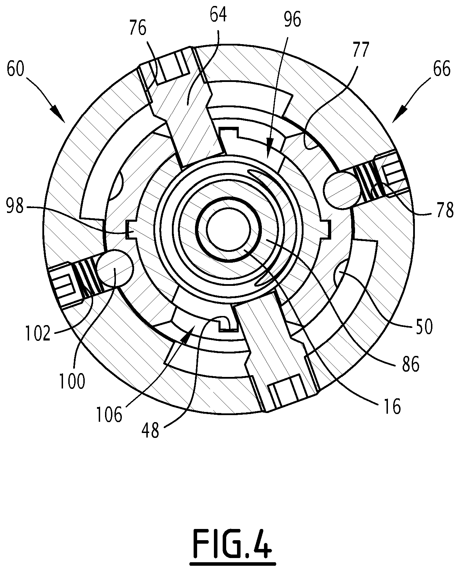

La première extrémité 70 de la virole comporte en outre : au moins une surface 77 interne de contact ; et au moins un logement interne 78 (Figure 4). Ladite surface 77 interne de contact, en forme de portion de cylindre de révolution, est au contact d'une surface externe de la jupe 40.

Le logement interne 78 est ménagé en creux par rapport à la surface 77 interne de contact. Le logement interne 78 s'étend radialement par rapport à l'axe 24 principal.

Dans le mode de réalisation représenté, ladite première extrémité 70 comporte deux surfaces 77 internes de contact et deux logements internes 78, symétriques par rapport à l'axe 24 principal.

La seconde extrémité 72 de la virole comporte une empreinte 79, de forme sensiblement complémentaire de celle des dents 32 de la première extrémité 26 du corps 12 tubulaire. Adjacente à l'empreinte 79, une surface interne de la virole forme une butée interne 80, perpendiculaire à l'axe 24 principal.

Entre la butée interne 80 et la première extrémité 70, la virole comporte une cavité interne 81 sur laquelle ouvre l'empreinte 79.

Comme il sera décrit ci-après, la virole 60 est bloquée en translation axiale par rapport au deuxième corps tubulaire 14 et mobile en rotation autour dudit deuxième corps tubulaire. L'organe 62 de blocage permet d'empêcher la rotation de la virole 60 quand le système télescopique n'est pas complètement rétracté.

L'organe 62 de blocage comporte une douille 82 et un troisième ressort 84 de compression.

La douille 82 comporte une paroi interne 86, une paroi externe 88 et un fond 90. Chacune des parois interne 86 et externe 88 est tubulaire et disposée selon l'axe 24 principal. La paroi interne 86 est emmanchée sur la première extrémité 51 de la tige 16 et apte à coulisser axialement le long de ladite tige.

La paroi externe 88 est espacée radialement de la paroi interne 86. La paroi externe 88 comprend au moins une rainure 92 en L. Ladite rainure 92 comprend une branche longitudinale 94 et une branche transversale 96, respectivement parallèle et perpendiculaire à l'axe 24 principal. Chacune desdites branches 94, 96 s'étend entre une extrémité fermée et une jonction avec l'autre desdites branches.

Dans le mode de réalisation représenté, la paroi externe 88 comporte deux rainures 92, symétriques l'un de l'autre par rapport à l'axe 24 principal.

La paroi externe 88 comporte en outre au moins une nervure 98 parallèle à l'axe 24 principal. L'au moins une nervure 98 présente une forme complémentaire de l'au moins une cannelure 48 interne de la jupe 40. L'au moins une nervure 98 est apte à coulisser axialement dans l'au moins une cannelure 48, de sorte à bloquer en rotation la douille 82 par rapport à la jupe 40 du deuxième corps tubulaire.

Dans le mode de réalisation représenté, la paroi externe 88 comporte plusieurs nervures 98, chaque nervure étant associée à une cannelure 48 de la jupe.

Le fond 90 forme une couronne plane, perpendiculaire à l'axe 24 principal et reliant les parois interne 86 et externe 88, à l'opposé de la portion élargie 38 du deuxième corps tubulaire.

Le troisième ressort 84 de compression est disposé entre les parois interne 86 et externe 88 de la douille. Le troisième ressort 84 s'étend axialement entre la portion élargie 38 du deuxième corps tubulaire et le fond 90 de la douille.

L'au moins un pion 64 est logé dans l'au moins un trou traversant 76 de la virole 60, formant une saillie interne par rapport à ladite virole. Dans le mode de réalisation représenté, le dispositif 18 de verrouillage comporte deux pions 64, chacun desdits pions étant disposé dans l'un des trous traversants 76 de la virole 60.

Chaque pion 64 est disposé dans l'une des fentes transversales 47 de la jupe 40, et apte à coulisser dans ladite fente transversale. Le blocage axial de la virole 60 par rapport au deuxième corps tubulaire 14 est ainsi assuré.

De même, une extrémité de chaque pion 64 est disposée dans l'une des rainures 92 de la douille 82, et apte à coulisser dans la branche longitudinale 94 et dans la branche transversale 96 de ladite rainure.

L'organe 66 de maintien est apte à maintenir la virole 60 soit dans la position de verrouillage, soit dans la position de déverrouillage.

De préférence, l'organe 66 de maintien comprend au moins une bille 100 et au moins un quatrième ressort 102 de compression.

Dans le mode de réalisation représenté, l'organe 66 de maintien comporte deux ensembles identiques, symétriques l'un de l'autre par rapport à l'axe 24 principal, chacun desdits ensembles étant formé par une bille 100 et un quatrième ressort 102 de compression.

Chaque bille 100 est configurée pour coulisser dans l'un des logements internes 78 de la virole. Chaque bille 100 est associée au quatrième ressort 102 correspondant, disposé dans le logement interne 78 correspondant et configuré pour repousser ladite bille hors dudit logement interne, en direction de l'axe 24 principal.

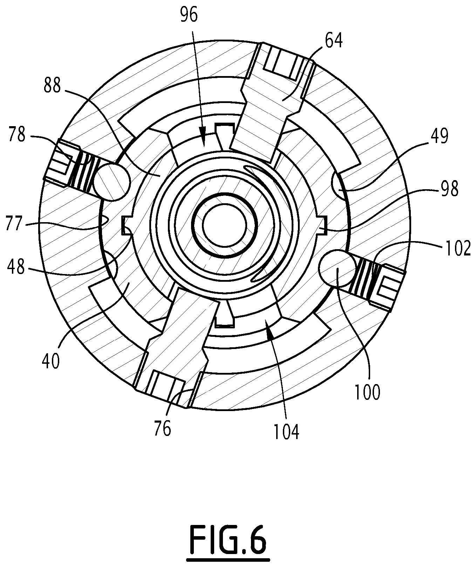

L'actionneur 68 est monté sur le support 44 de la portion élargie 38 et relié à la patte 74 de la virole 60. L'actionneur 68 est configuré pour faire pivoter la virole 60 par rapport à la tige 16 du deuxième corps tubulaire 14 autour de l'axe 24 principal. En particulier, l'actionneur 68 est configuré pour faire pivoter la virole 60 entre une position de déverrouillage, représentée sur les figures 3 et 4, et une position de verrouillage, représentée sur les figures 5 et 6.

La configuration intermédiaire de l'ensemble 10, visible sur la figure 2, va maintenant être décrite.

Dans la configuration intermédiaire, la virole 60 est dans une position angulaire, par rapport au deuxième corps tubulaire 14, correspondant à la position de déverrouillage. Chaque pion 64 est disposé au niveau de l'extrémité fermée de la branche longitudinale 94 de la rainure 92 correspondante ; et au niveau d'une première extrémité 104 de la fente transversale 47 correspondante.

Le troisième ressort 84 est dans un état de compression minimale.

La face d'extrémité 35 du premier corps tubulaire, et les premières extrémités 54, 55 des premier 20 et deuxième 22 tubes intermédiaires sont écartées axialement du fond 90 de la douille 82 : le système télescopique n'est pas complètement rétracté.

Les dents 32 du corps 12 tubulaire sont partiellement insérées dans l'empreinte 79 de la virole. Dans cette configuration, les dents 32 et la première extrémité 26 dudit corps tubulaire sont aptes à coulisser axialement dans la virole, en direction de la portion élargie 38.

En outre, chaque bille 100 de l'organe 66 de maintien est disposée dans la première cupule 49 correspondante.

La configuration des figures 3 et 4 va maintenant être décrite. Sur les figures 3 et 4, la virole 60 est en position de déverrouillage par rapport au deuxième corps tubulaire 14 et l'ensemble 10 est en configuration rétractée.

Plus précisément, la première extrémité 26 du premier corps 12 tubulaire et les premières extrémités 54, 55 des premier 20 et deuxième 22 tubes intermédiaires sont dans la cavité interne 81 de la virole, toutes trois en appui axial contre le fond 90 de la douille 82. Le troisième ressort 84 est dans un état de compression maximale. Chaque pion 64 est disposé à la jonction des branches longitudinale 94 et transversale 96 de la rainure 92 correspondante ; et au niveau de la première extrémité 104 de la fente transversale 47 correspondante.

Par ailleurs, chaque bille 100 est disposée dans la première cupule 49 correspondante de la jupe 40, formant une saillie interne par rapport à la virole 60. Les billes 100 bloquent ainsi une rotation intempestive de la virole 60 autour de la portion élargie 38.

La configuration des figures 5 et 6 va maintenant être décrite. Sur les figures 5 et 6, l'ensemble 10 est en configuration rétractée et la virole 60 est en position de verrouillage par rapport au deuxième corps tubulaire 14.

Plus précisément, la première extrémité 26 du premier corps 12 tubulaire et les premières extrémités 54, 55 des premier 20 et deuxième 22 tubes intermédiaires sont dans la cavité interne 81 de la virole, en appui axial contre le fond 90 de la douille 82. Le troisième ressort 84 est dans un état de compression maximal. Chaque pion 64 est disposé au niveau de l'extrémité fermée de la branche transversale 96 de la rainure 92 correspondante ; et au niveau d'une seconde extrémité 106 de la fente transversale 47 correspondante. Chaque bille 100 est disposée dans la deuxième cupule 50 correspondante.

En outre, dans la position de verrouillage de la virole, la butée interne 80 de ladite virole est axialement en vis-à-vis de la face arrière 34 des dents 32 de la première extrémité 26 du premier corps tubulaire. Les dents 32 forment ainsi une contre-butée qui bloque axialement ladite première extrémité 26 dans la cavité interne 81 de la virole.

L'invention se rapporte en outre à un appareil de type aéronef (non représenté), comprenant : une structure ; un premier et un deuxième capots, articulés sur ladite structure ; et un ensemble 10 télescopique décrit ci-dessus. Les premier 36 et deuxième 42 moyens d'assemblage de l'ensemble 10 sont par exemple assemblés respectivement au premier et au deuxième capots. L'ensemble 10 en configuration déployée permet de disposer les capots dans une position ouverte. L'ensemble 10 en configuration rétractée permet de disposer et de maintenir les capots en position fermée.

En variante, l'aéronef (non représenté) comprend une structure ; un capot articulé sur la structure ; et un ensemble 10 télescopique décrit ci-dessus. Les premier 36 et deuxième 42 moyens d'assemblage de l'ensemble 10 sont par exemple assemblés respectivement au capot et à la structure. L'ensemble 10 en configuration déployée permet de disposer le capot dans une position ouverte. L'ensemble 10 en configuration rétractée permet de disposer et de maintenir le capot en position fermée.

Un procédé de fonctionnement de l'ensemble 10 va maintenant être décrit.

A partir de la configuration déployée de l'ensemble 10, le système télescopique formé par le premier corps 12 tubulaire, les premier 20 et deuxième 22 tubes intermédiaires et le deuxième corps tubulaire 14 se rétracte axialement, par exemple lors de la fermeture du capot décrit ci-dessus. L'ensemble 10 arrive dans la configuration intermédiaire de la figure 2. La première extrémité 26 du corps 12 tubulaire s'enfonce axialement dans l'empreinte 79 et arrive dans la cavité interne 81, au contact du fond 90 de la douille 82.

La pression axiale exercée par la face d'extrémité 35 sur la douille 82 conduit à la compression du troisième ressort 84. Les pions 64 se retrouvent alors automatiquement dans la jonction avec la branche transversale 96 de la rainure de la douille. Lorsque ladite jonction est atteinte par le pion 64, le troisième ressort 84 est dans l'état de compression maximale décrit ci-dessus (figure 3).

L'actionneur 68 est alors activé pour mettre la virole 60 en rotation autour de la tige 16 selon une portion angulaire autour de l'axe 24 principal. La douille 82 reste fixe via l'engagement des nervures 98 et cannelures 48. Ladite rotation conduit à un déplacement angulaire de chaque pion 64 vers l'extrémité fermée de la branche transversale 96 de la rainure 92 de la douille 82 ; et de la première 104 à la seconde 106 extrémité de la fente transversale 47 de la jupe 40.

Par ailleurs, durant ladite rotation, l'empreinte 79 de la virole se décale angulairement, plaçant la butée interne 80 en vis-à-vis des dents 32 du premier corps tubulaire. La virole 60 est ainsi en position de verrouillage, la butée interne 80 bloquant la première extrémité 26 du premier corps tubulaire à l'intérieur de la cavité interne 81 de ladite virole.

Dans le mode de réalisation représenté, une dimension axiale de la cavité interne 81 autorise un jeu axial 108 (figure 5) de la première extrémité 26 du premier corps tubulaire à l'intérieur de ladite cavité interne, dans la configuration rétractée.

Par ailleurs, la rotation de la virole 60 depuis la position de déverrouillage déplace angulairement chaque première cupule 49. La bille 100 correspondante est repoussée dans le logement interne 78 de la virole, comprimant le quatrième ressort 102 correspondant.

Lorsque la virole arrive en position de verrouillage, chaque deuxième cupule 50 se retrouve angulairement en vis-à-vis d'un logement interne 78. La bille 100 correspondante, repoussée par le quatrième ressort 102, se loge dans ladite deuxième cupule 50. La virole est à nouveau bloquée pour éviter une rotation intempestive par rapport à la tige 16.

Afin de faire passer la virole de la position de verrouillage à la position de déverrouillage, dans un procédé inverse de celui décrit ci-dessus, l'actionneur est activé pour faire pivoter ladite virole en sens inverse. L'empreinte 79 s'aligne à nouveau avec les dents 32, autorisant un déplacement axial de la première extrémité 26 du premier corps tubulaire hors de la virole 60.

Le pion 64 se trouve à nouveau à la jonction des branches transversale 96 et longitudinale 94 de la rainure 92. Sous l'action du troisième ressort 84 qui se détend, la douille se déplace axialement vers l'empreinte 79 de la virole et le pion se retrouve alors contre l'extrémité fermée de ladite branche longitudinale. La virole 60 est ainsi bloquée en position de déverrouillage par rapport au premier corps tubulaire 12 et au deuxième corps tubulaire 14. Le ou les capots peuvent alors être ouverts.

## Revendications

1. Ensemble (10) télescopique comprenant : un premier corps (12) tubulaire, s'étendant selon un axe (24) principal ; et un deuxième corps tubulaire (14) comprenant une portion élargie (38) et une tige (16), ladite tige étant apte à coulisser dans une première extrémité axiale (26) du premier corps tubulaire entre une configuration déployée et une configuration rétractée ;
l'ensemble télescopique comprenant en outre un dispositif (18) de verrouillage de la configuration rétractée, ledit dispositif de verrouillage comprenant une virole (60) s'étendant selon l'axe principal, une première extrémité axiale (70) de ladite virole étant disposée autour d'une première extrémité (51) de la tige (16) du deuxième corps tubulaire (14), à proximité de la portion élargie (38) ;
une deuxième extrémité axiale (72) de la virole comprenant une butée interne (80) ;
la première extrémité axiale du premier corps tubulaire comprenant une contre-butée (34), apte à coopérer avec ladite butée interne pour bloquer en translation le premier corps tubulaire et la virole ;
la virole étant bloquée en translation axiale par rapport au deuxième corps tubulaire (14) et mobile en rotation autour dudit deuxième corps tubulaire, entre une position de déverrouillage et une position de verrouillage,
l'ensemble télescopique étant tel que :
- dans la position de déverrouillage, la butée interne (80) est décalée angulairement par rapport à la contre-butée (34), de sorte à permettre un coulissement du deuxième corps tubulaire (14) dans le premier corps tubulaire (12) entre la configuration déployée et la configuration rétractée ; et
- dans la position de verrouillage, la butée (80) est angulairement alignée avec la contre-butée (34), de sorte à bloquer le deuxième corps tubulaire (14) dans le premier corps tubulaire (12) en configuration rétractée ,
l'ensemble télescopique étant **caractérisé en ce qu'**il comprend en outre :
- un organe (62) de blocage apte à autoriser ou à interdire la rotation de la virole autour du deuxième corps tubulaire (14), dans lequel l'organe (62) de blocage comporte : une douille (82) disposée autour de la première extrémité (51) de la tige (16) ; et un ressort (84) de compression, le ressort de compression étant disposé axialement entre la portion élargie (38) du deuxième corps tubulaire (14) et la douille ; et
- un pion (64) solidaire de la première extrémité axiale de la virole et en saillie interne par rapport à ladite virole ;
l'organe de blocage comprenant une rainure (92) en L, ladite rainure en L comprenant une branche longitudinale (94) et une branche transversale (96), respectivement parallèle et perpendiculaire à l'axe principal, tel que :
- dans la position de déverrouillage, la première extrémité (26) du premier corps est à distance de la douille (82), le ressort (84) est dans un état de compression minimale, et le pion est disposé dans la branche longitudinale de la rainure en L de l'organe de blocage ; et
- dans la position de verrouillage, la première extrémité (26) du premier corps est en contact avec la douille (82), le ressort (84) est dans un état de compression maximale, et le pion est disposé dans la branche transversale de la rainure en L.

2. Ensemble télescopique selon la revendication 1, dans lequel le deuxième corps tubulaire (14) comporte une jupe (40) s'étendant autour de la première extrémité de la tige, ladite jupe comprenant une fente transversale (47) dans laquelle le pion est apte à coulisser.

3. Ensemble télescopique selon la revendication 1 ou 2, le dispositif de verrouillage comprenant en outre un organe (66) de maintien de la virole dans une position de verrouillage ou de déverrouillage.

4. Ensemble télescopique selon la revendication 3, dans lequel l'organe (66) de maintien comprend : une bille (100) apte à coulisser radialement dans un logement interne (78) de la virole ; et une cupule (49, 50) apte à accueillir la bille en saillie interne par rapport à la virole.

5. Ensemble télescopique selon l'une des revendications précédentes, comprenant en outre au moins un tube intermédiaire (20, 22) entre la tige (16) et le premier corps (12) tubulaire, l'au moins un tube intermédiaire étant apte à coulisser autour de la tige et dans la première extrémité axiale du premier corps tubulaire.

6. Ensemble télescopique selon l'une des revendications précédentes, comprenant en outre un actionneur (68) apte à faire pivoter la virole autour de l'axe principal, entre les positions de verrouillage et de déverrouillage.

7. Appareil comprenant : une structure ; un premier capot articulé sur ladite structure ; et un ensemble (10) télescopique selon l'une des revendications précédentes, le premier corps (12) tubulaire et le deuxième corps tubulaire (14) étant assemblés respectivement à la structure et au premier capot, la configuration déployée de l'ensemble télescopique permettant de disposer le premier capot dans une position ouverte, la configuration rétractée de l'ensemble télescopique permettant de disposer et de maintenir le premier capot en position fermée.

8. Appareil comprenant : une structure ; un premier et un deuxième capots articulés sur ladite structure ; et un ensemble (10) télescopique selon l'une des revendications 1 à 6, le premier corps (12) tubulaire et le deuxième corps tubulaire (14) étant assemblés respectivement au premier et au deuxième capots, la configuration déployée de l'ensemble télescopique permettant de disposer les capots dans une position ouverte, la configuration rétractée de l'ensemble télescopique permettant de disposer et de maintenir les capots en position fermée.

## Patentansprüche

1. Teleskopische Anordnung (10), umfassend: einen ersten rohrförmigen Körper (12), der sich entlang einer Hauptachse (24) erstreckt; und einen zweiten rohrförmigen Körper (14), umfassend einen erweiterten Abschnitt (38) und eine Stange (16), wobei die Stange in einem ersten axialen Ende (26) des ersten rohrförmigen Körpers zwischen einer ausgefahrenen und einer eingefahrenen Konfiguration gleiten kann;
die teleskopische Anordnung ferner umfassend eine Vorrichtung (18) zum Verriegeln der eingezogenen Konfiguration, die Verriegelungsvorrichtung umfassend einen Ring (60), der sich entlang der Hauptachse erstreckt, wobei ein erstes axiales Ende (70) des Rings um ein erstes Ende (51) der Stange (16) des zweiten rohrförmigen Körpers (14) in der Nähe des erweiterten Abschnitts (38) angeordnet ist;
ein zweites axiales Ende (72) des Rings einen inneren Anschlag (80) umfasst; das erste axiale Ende des ersten rohrförmigen Körpers einen Gegenanschlag (34) umfasst, der mit dem inneren Anschlag zusammenwirken kann, um den ersten rohrförmigen Körper und den Ring gegen Translation zu blockieren;
wobei der Ring gegen eine axiale Translation in Bezug auf den zweiten rohrförmigen Körper (14) blockiert ist und um den zweiten rohrförmigen Körper zwischen einer Entriegelungsposition und einer Verriegelungsposition drehbar ist,
wobei die teleskopische Anordnung derart ist, dass:
- in der Entriegelungsposition der innere Anschlag (80) winkelmäßig gegenüber dem Gegenanschlag (34) versetzt ist, um ein Gleiten des zweiten rohrförmigen Körpers (14) in dem ersten rohrförmigen Körper (12) zwischen der ausgefahrenen Konfiguration und der eingefahrenen Konfiguration zu ermöglichen; und
- in der Verriegelungsposition der Anschlag (80) winkelmäßig mit dem Gegenanschlag (34) ausgerichtet ist, um den zweiten röhrenförmigen Körper (14) in der eingezogenen Konfiguration in dem ersten röhrenförmigen Körper (12) zu verriegeln,
wobei die teleskopische Anordnung **dadurch gekennzeichnet ist, dass** sie ferner Folgendes umfasst:
- ein Blockierorgan (62), das geeignet ist, um die Drehung des Rings um den zweiten rohrförmigen Körper (14) zuzulassen oder zu verhindern, wobei das Blockierorgan (62) Folgendes umfasst: eine Hülse (82), die um das erste Ende (51) der Stange (16) angeordnet ist; und eine Druckfeder (84), wobei die Druckfeder axial zwischen dem erweiterten Abschnitt (38) des zweiten rohrförmigen Körpers (14) und der Hülse angeordnet ist; und
- einen Stift (64), der fest mit dem ersten axialen Ende des Rings verbunden ist und in Bezug auf den Ring nach innen hervorsteht;
das Blockierorgan eine L-förmige Nut (92) umfasst, die L-förmige Nut umfassend einen Längsschenkel (94) und einen Querschenkel (96) parallel bzw. senkrecht zur Hauptachse, sodass:
- das erste Ende (26) des ersten Körpers in der Entriegelungsposition von der Hülse (82) beabstandet ist, die Feder (84) in einem Zustand minimaler Kompression ist und der Stift in dem Längsschenkel der L-förmigen Nut des Blockierorgans angeordnet ist; und
- in der Verriegelungsposition, das erste Ende (26) des ersten Körpers die Hülse (82) berührt, die Feder (84) in einem Zustand maximaler Kompression ist und der Stift in dem Querschenkel der L-förmigen Nut angeordnet ist.

2. Teleskopische Anordnung nach Anspruch 1, wobei der zweite rohrförmige Körper (14) eine Schürze (40) umfasst, die sich um das erste Ende der Stange erstreckt, wobei die Schürze einen Querschlitz (47) aufweist, in dem es dem Stift möglich ist, zu gleiten.

3. teleskopische Anordnung nach Anspruch 1 oder 2, wobei die Verriegelungsvorrichtung ferner ein Organ (66) zum Halten des Rings in einer verriegelten oder entriegelten Position umfasst.

4. teleskopische Anordnung nach Anspruch 3, wobei das Halteorgan (66) Folgendes umfasst: eine Kugel (100), die in einer inneren Aufnahme (78) des Rings radial gleiten kann; und einen Becher (49, 50), der geeignet ist, um die Kugel aufzunehmen, indem er in Bezug auf den Ring nach innen hervorsteht.

5. Teleskopische Anordnung nach einem der vorherigen Ansprüche, ferner umfassend mindestens ein Zwischenrohr (20, 22) zwischen der Stange (16) und dem ersten rohrförmigen Körper (12), wobei es dem mindestens einen Zwischenrohr möglich ist, um die Stange und in dem ersten axialen Ende des ersten rohrförmigen Körpers zu gleiten.

6. Teleskopische Anordnung nach einem der vorherigen Ansprüche, ferner umfassend einen Aktuator (68), der geeignet ist, um den Ring zwischen der Verriegelungs- und der Entriegelungsposition um die Hauptachse zu schwenken.

7. Gerät, umfassend: eine Struktur; eine erste Haube, die an der Struktur angelenkt ist; und eine teleskopische Anordnung (10) nach einem der vorherigen Ansprüche, wobei der erste rohrförmige Körper (12) und der zweite rohrförmige Körper (14) mit der Struktur bzw. der ersten Haube zusammengesetzt sind, wobei die ausgefahrene Konfiguration der teleskopischen Anordnung die Anordnung der ersten Haube in einer offenen Position ermöglicht und die eingefahrene Konfiguration der teleskopischen Anordnung die Anordnung und das Halten der ersten Haube in der geschlossenen Position ermöglicht.

8. Gerät, umfassend: einen Rahmen; eine erste und eine zweite Abdeckung, die an dem Rahmen angelenkt sind; und eine teleskopische Anordnung (10) nach einem der Ansprüche 1 bis 6, wobei der erste rohrförmige Körper (12) und der zweite rohrförmige Körper (14) jeweils mit der ersten und der zweiten Abdeckung zusammengesetzt sind, wobei die ausgefahrene Konfiguration der teleskopischen Anordnung es ermöglicht, die Abdeckungen in einer offenen Position anzuordnen, und die eingefahrene Konfiguration der teleskopischen Anordnung es ermöglicht, die Abdeckungen in einer geschlossenen Position anzuordnen und zu halten.

## Claims

1. A telescopic assembly (10) comprising: a first tubular body (12) extending along a main axis (24); and a second tubular body (14) comprising an enlarged portion (38) and a rod (16), said rod being suitable for sliding in a first axial end (26) of the first tubular body between a deployed configuration and a retracted configuration;
the telescopic assembly further comprising a device (18) for locking the retracted configuration, said locking device comprising a ferrule (60) extending along the main axis, a first axial end (70) of said ferrule being positioned around a first end (51) of the rod (16) of the second tubular body (14), in the vicinity of the widened portion (38);
a second axial end (72) of the ferrule comprising an internal stop (80); the first axial end of the first tubular body comprising a counter-stop (34), able to cooperate with the said internal stop in order to block the first tubular body and prevent the ferrule from being displaced;
the ferrule is axially locked with respect to the second tubular body (14) and rotatable around said second tubular body between an unlocking position and a locking position,
the telescopic assembly being such that:
- in the unlocked position, the internal stop (80) is angularly offset with respect to the counter-stop (34), so as to allow sliding of the second tubular body (14) in the first tubular body (12) between the extended configuration and the retracted configuration; and
- in the locking position, the stop (80) is angularly aligned with the counter-stop (34), so as to block the second tubular body (14) in the first tubular body (12) in the retracted configuration,
the telescopic assembly being **characterised in that** it further comprises:
- a locking member (62) configured to allow or prevent rotation of the ferrule around the second tubular body (14), wherein the locking member (62) comprises: a sleeve (82) arranged around the first end (51) of the rod (16); and a compression spring (84), the compression spring being arranged axially between the enlarged portion (38) of the second tubular body (14) and the sleeve; and
- a pin (64) integral with the first axial end of the ferrule and projecting internally with respect to said ferrule;
the locking member comprising an L-shaped groove (92), said L-shaped groove comprising a longitudinal branch (94) and a transverse branch (96), respectively parallel and perpendicular to the main axis, such that:
- in the unlocked position, the first end (26) of the first body is at a distance from the sleeve (82), the spring (84) is in a state of minimum compression, and the pin is arranged in the longitudinal branch of the L-shaped groove of the locking member; and
- in the locking position, the first end (26) of the first body is in contact with the sleeve (82), the spring (84) is in a state of maximum compression, and the pin is arranged in the transverse branch of the L-shaped groove.

2. Telescopic assembly according to claim 1, in which the second tubular body (14) comprises a skirt (40) extending around the first end of the rod, said skirt comprising a transverse slot (47) in which the pin is able to slide.

3. Telescopic assembly according to claim 1 or 2, the locking device further comprising a member (66) for holding the ferrule in a locked or unlocked position.

4. A telescopic assembly according to claim 3, in which the retaining member (66) comprises: a ball (100) suitable for sliding radially in an internal housing (78) of the ferrule; and a cup (49, 50) suitable for receiving the ball projecting internally relative to the ferrule.

5. Telescopic assembly according to one of the preceding claims, further comprising at least one intermediate tube (20, 22) between the rod (16) and the first tubular body (12), the at least one intermediate tube being able to slide around the rod and in the first axial end of the first tubular body.

6. Telescopic assembly according to one of the preceding claims, further comprising an actuator (68) capable of pivoting the ferrule around the main axis, between the locked and unlocked positions.

7. Apparatus comprising: a structure; a first cover articulated on said structure; and a telescopic assembly (10) according to one of the preceding claims, the first tubular body (12) and the second tubular body (14) being assembled respectively to the structure and to the first cover, the extended configuration of the telescopic assembly making it possible to arrange the first cover in an open position, the retracted configuration of the telescopic assembly making it possible to arrange and hold the first cover in a closed position.

8. Apparatus comprising: a structure; first and second covers hinged to said structure; and a telescopic assembly (10) according to one of claims 1 to 6, the first tubular body (12) and the second tubular body (14) being assembled respectively to the first and second covers, the extended configuration of the telescopic assembly enabling the covers to be arranged in an open position, the retracted configuration of the telescopic assembly enabling the covers to be arranged and held in a closed position.
